# DEMANDE DE BREVET EUROPEEN

(11) **EP 1 006 155 A1**
(43) Date de publication de la demande: **07.06.2000**
(21) Numéro de dépôt: 98122674.9
(22) Date de dépôt: 30.11.1998
(51) Int. Cl.: C09B 61/00, A23L 1/275, A23J 1/00

(54) **Produit colorant naturel obtenu à partir de plantes vertes et son procédé d'obtention**

(71) Demandeur: SOCIETE DES PRODUITS NESTLE S.A., 1800 Vevey (CH)
(72) Inventeur: Bortlik, Karlheinz, 1073 Savigny (CH); Gauthier-Jaques, Alexandre, 1006 Lausanne (CH)
(74) Mandataire: Thomas, Alain

(57) **Abrégé**

La présente invention concerne un produit colorant naturel obtenu à partir de plantes vertes, à base de chlorophylle ayant, sur une base sèche, une teneur en chlorophylle comprise entre 30 et 200 mg/g et une teneur en protéines endogènes comprise entre 150 et 500 mg/g. Le produit se présente sous la forme de poudre ou de pâte ayant une teneur en eau comprise entre 10 et 30%.

## Description

La présente invention concerne un produit colorant naturel obtenu à partir de plantes vertes, ainsi que son procédé d'obtention.

La coloration d'aliments avec des extraits de plantes vertes est une tâche difficile, car la chlorophylle, le pigment vert naturel, est instable. Pour résoudre ce problème, on utilise dans l'industrie des pigments artificiels qui sont plus stables que la chlorophylle ou des chlorophylles stabilisée chimiquement. Cependant, la coloration artificielle des aliments est soumise à des règles strictes et elle est de moins en moins acceptée par le consommateur. La tendance actuelle est par conséquent de trouver de nouveaux colorants naturels.

Les biomolécules de plantes, comme la chlorophylle, ne survivraient pas dans la cellule de la plante sans un minimum de protection à l'encontre d'autres constituants cellulaires. Par exemple, la chlorophylle serait très instable si elle n'était pas séparée des acides du liquide cellulaire. Les plantes ont une structure cellulaire hautement organisée, de sorte que la chlorophylle est protégée naturellement contre les dégradations par des substances cellulaires.

Il est connu que les traitements alimentaires détruisent les organisations cellulaires. Même les procédés doux, comme le mouturage de feuilles d'épinard, altèrent l'environnement naturel de la chlorophylle. Lorsque des feuilles d'épinard sont moulues, la majeure partie de l'organisation de protection de la chlorophylle est détruite durant le procédé. La conséquence en est que la chlorophylle et les constituants actifs de la cellule entrent en contact et la chlorophylle est ainsi rapidement dégradée. Il a été démontré que le contact avec les acides cellulaires est l'une des causes principales du changement de couleur après la mise en oeuvre du procédé.

Pour régler le problème de l'acidification de la chlorophylle, des solutions tampon sont utilisées comme milieu de broyage. Cependant, il est bien connu que des pH neutres à basiques altèrent le goût des aliments. D'autre part, la neutralisation des acides cellulaires n'empêche pas totalement la dégradation de la chlorophylle par d'autres constituants actifs de la cellule.

Le but de la présente invention est de préserver l'environnement biologique de la chlorophylle et ainsi de mettre à disposition des consommateurs un produit naturel à base de chlorophylle, dans lequel on arrive à réduire le risque de dégradation de la couleur vert brillant vers la couleur vert brun olive. La présente invention propose en outre un procédé d'obtention du produit naturel précité.

La présente invention concerne un produit colorant naturel obtenu à partir de plantes vertes à base de chlorophylle ayant, sur une base sèche, une teneur en chlorophylle comprise entre 30 et 200 mg/g et une teneur en protéines endogènes comprise entre 150 et 500 mg/g. Les teneurs ci-dessus s'entendent par rapport à un gramme d'extrait. Le reste des constituants est constitué essentiellement de lipides acyliques.

Il existe déjà des produits naturels pour colorer en vert sur le marché. Mais dans ces produits, on ne peut pas garantir la pérennité de la coloration verte dans le temps, car ils ont été produits par des méthodes ne ménageant pas la structure naturelle de la plante. Certains de ces produits contiennent en outre des protéines exogènes.

Si on compare le produit selon l'invention avec des feuilles d'épinard, on trouve une teneur en chlorophylle de l'ordre de 9 mg/g, calculé en matière sèche et une teneur en protéines de l'ordre de 206 mg/g.

Le produit selon l'invention a de préférence une teneur en chlorophylle comprise entre 70 et 150 mg et une teneur en protéines comprise entre 300 et 400 mg/g.

Le produit selon l'invention est obtenu à partir à partir de plantes vertes contenant de la chlorophylle. De préférence, on utilise des plantes peu chères, par exemple choisies dans le groupe constitué par les feuilles d'épinard, la luzerne, ou les orties.

La détermination de la teneur en chlorophylle est faite par spectrophotométrie (spectrophotomètre Uvikon 930 de la Société Kontron Instruments) en utilisant les données rapportées par H.K. Lichtenthaler dans "Chlorophylls and carotenoids : Pigments of photosynthetic biomembranes." Meth. Enzymol. 148 (1987), 350-382.

La détermination de la teneur en protéines est faite par la méthode de O.H. Lowry, N.J. Rosebrough, A.L. Farr, R.J. Randall dans "Protein measurement with the Folin phenol reagent." J.Biol.Chem. 193(1951), 265-275.

Le produit naturel selon l'invention contient en outre, sur une base sèche, entre 1 et 5 mg/g de carotène. Pour des feuilles d'épinard, cette concentration est normalement de l'ordre de 0,8 mg.

Il est possible de disposer du produit naturel selon l'invention sous diverses formes. La forme poudre est la plus pratique quant à l'utilisation. Il est également possible d'avoir le produit sous la forme de pâte ayant une teneur en eau comprise entre 10 et 30 %.

Le produit selon l'invention ne contient pas d'additif, ni d'émulsifiant et il a une bonne résistance aux acides et à un traitement thermique.

La présente invention concerne en outre le procédé d'obtention du produit décrit ci-dessus. Selon le procédé de l'invention on opère selon les étapes suivantes :
- on mélange les plantes vertes avec de l'eau et on fait un laminage grossier desdites plantes,
- on effectue un broyage plus fin et on élimine les débris de tissus,
- on effectue un second broyage pour obtenir une purée,
- on effectue une filtration de la purée obtenue de manière à séparer les débris cellulaires,
- on fait une concentration du liquide filtré jusqu'à arriver à une teneur en eau comprise entre 10 et 30 % et on fait éventuellement un séchage. Le séchage peut se faire par pulvérisation ou par lyophilisation pour obtenir une poudre.

Le procédé selon l'invention revient en sorte à faire une purification, sans toucher à l'intégrité de l'environnement membranaire contenant la chlorophylle en extrayant les acides et autres constituants néfastes à la bonne préservation de la couleur verte, due à la chlorophylle.

Le procédé permet ainsi de disposer de produit naturel colorant en vert, conservant la faculté colorante pendant une durée de l'ordre de un an , voire plus. La stabilité est maximale pour autant que le produit est conservé à l'abri de la lumière, au sec, et si possible en limitant la teneur en oxygène.

La température à laquelle le procédé est mis en oeuvre n'est pas critique à condition de ne pas dépasser 60 °C. On opère de préférence à la température ambiante.

Dans la première étape de mélange avec l'eau, on travaille de préférence avec un rapport plantes vertes/eau compris entre 1:2 et 1:5 de manière à maximaliser le taux d'extraction et à ne pas nécessiter des installations techniques trop volumineuses. Dans la présente description, tous les pourcentages et les rapports sont en poids.

Après le premier broyage, on élimine les débris de tissus sur un filtre d'ouverture de mailles compris entre 1 et 2,4 mm, de manière à ne pas bloquer les petites particules tout en séparant efficacement les débris de tissus.

La dernière étape de filtration de la purée de plantes vertes est importante, car elle permet de bien éliminer les constituants néfastes à la préservation de la couleur verte. On utilise à cet effet un filtre ayant une ouverture de mailles comprise entre 10 et 30 microns.

La présente invention concerne également l'utilisation du produit naturel décrit ci-dessus. Ce produit est bien entendu utilisé pour la coloration des aliments. En particulier, on l'utilise en le mélangeant à raison de 0,01 à 1 pour mille avec du lait, de la crème glacée, des pâtes alimentaires, des snacks pour l'apéritif, des desserts en gelée, des confitures, des marmelades, des produits cosmétiques, une base pour l'alimentation animale. La quantité maximale de produit que l'on peut mélanger n'est pas limitée, si ce n'est que l'on n'obtient pas nécessairement une meilleure coloration.

Dans le cas de l'utilisation avec du lait, on peut opérer de la manière suivante. On mélange le produit selon l'invention, soit en poudre, soit sous la forme de pâte, avec une petite quantité de lait, on fait une première homogénéisation. On mélange ensuite avec le reste du lait à chaud et on effectue une seconde homogénéisation, on fait une stérilisation UHT et on dispose ainsi d'une base laitière colorée stérilisée sur laquelle on peut faire un remplissage aseptique pour vendre par exemple sous forme de briques.

La suite de la description est faite en relation avec les exemples.

### Exemple 1

On mélange 50 kg de feuilles d'épinard avec 100 kg d'eau du robinet. On lamine grossièrement les feuilles avec un coupeur de légumes Urschel suivi d'un broyage avec un broyeur Fitzmill (tamisage 1-2.4mm, système de refroidissement en marche). Séparé des débris de tissus, la pâte de feuilles est broyée plus finement avec un moulin Fryma. On centrifuge le broyat dans une essoreuse Padberg (ouverture de mailles comprise entre 10 et 30 microns, 1000-4000 tours/min) pour éliminer les débris cellulaires. On concentre le jus dans un concentreur Westfalia . Le concentrat est soit congelé, soit séché ,auquel cas on obtient environ 1 kg de poudre. Calculé en poids sec, le produit a la composition suivante, en chlorophylle : 70 g, en protéines : 334 g, en carotène : 2.9 g, en lutéine : 5.8 g.

### Exemple 2

On mélange 50 g de concentrat congelé obtenu dans l'exemple 1 avec 1 l. de lait et on fait une première homogénéisation avec un homogénéisateur Rannie . On mélange à chaud (40°C) le produit homogénéisé à 40 l. de lait entier ou de crème 25% avec un mélangeur à hélice. On homogénéise le mélange avec un homogénéisateur Rannie . On stérilise UHT le produit homogénéisé par injection de vapeur (4 sec, 150°C). On obtient une base laitière colorée stérilisée utilisable pour des crèmes glacées, par exemple.

## Revendications

1. Produit colorant naturel obtenu à partir de plantes vertes à base de chlorophylle ayant, sur une base sèche, une teneur en chlorophylle comprise entre 30 et 200 mg/g et une teneur en protéines endogènes comprise entre 150 et 500 mg/g.

2. Produit naturel selon la revendication 1, caractérisé en ce qu'il contient, sur une base sèche, entre 1 et 5 mg/g de carotène.

3. Produit naturel selon l'une des revendications 1 ou 2, caractérisé en ce qu'il se présente sous la forme de poudre ou la forme de pâte ayant une teneur en eau comprise entre 10 et 30 %.

4. Procédé de préparation du produit selon l'une des revendications 1 à 3, dans lequel on opère selon les étapes suivantes :
- on mélange les plantes vertes avec de l'eau et on fait un laminage grossier desdites plantes,
- on effectue un broyage plus fin et on élimine les débris de tissus,
- on effectue un second broyage pour obtenir une purée,
- on effectue une filtration de la purée obtenue de manière à séparer les débris cellulaires,
- on fait une concentration du liquide filtré jusqu'à arriver à une teneur en eau comprise entre 10 et 30 % et on fait éventuellement un séchage pour obtenir une poudre.

5. Procédé selon la revendication 4, caractérisé en ce qu'on mélange les plantes vertes avec l'eau dans un rapport plantes vertes/eau compris entre 1:2 et 1:5.

6. Procédé selon l'une des revendications 4 ou 5, caractérisé en ce qu'on élimine les débris de tissus sur un filtre d'ouverture de mailles compris entre 1 et 2,4 mm.

7. Procédé selon l'une des revendications 4 à 6, caractérisé en ce qu'on effectue la filtration de la purée sur un filtre ayant une ouverture de mailles comprise entre 10 et 30 microns.

8. Utilisation du produit naturel selon l'une des revendications 1 à 3, dans lequel on mélange ledit produit à une teneur comprise entre 0,01 et 1 pour mille avec du lait, de la crème glacée, des pâtes alimentaires, des produits infantiles.
